# EUROPÄISCHE PATENTANMELDUNG

(11) **EP 2 952 823 A1**
(43) Veröffentlichungstag der Anmeldung: **09.12.2015**
(21) Anmeldenummer: 15169734.9
(22) Anmeldetag: 28.05.2015
(51) Int. Cl.: F24H 7/04, F24H 9/20, G05D 23/19, G05F 1/67, H04L 12/28, H05B 1/02, H02J 3/38

(54) **HEIZANLAGE FÜR EIN WOHNGEBÄUDE, ELEKTRO-SPEICHERHEIZGERÄT FÜR EINE SOLCHE HEIZANLAGE SOWIE VERFAHREN ZUM STEUERN EINER SOLCHEN HEIZANLAGE**

(30) Priorität: 03.06.2014 DE 102014210468
(71) Anmelder: Glen Dimplex Deutschland GmbH, 95326 Kulmbach (DE)
(72) Erfinder: Beckstein, Ewald, 95326 Kulmbach (DE); Bareuther, Helmut, 95497 Goldkronach (DE)
(74) Vertreter: FDST Patentanwälte

(57) **Zusammenfassung**

Die Erfindung betrifft eine Heizanlage (2) für ein Wohngebäude (4) umfassend ein Elektro-Speicherheizgerät (10) mit einem integrierten Laderegler (32), wobei der Laderegler (32) derart ausgebildet ist, dass das Elektro-Speicherheizgerät (10) in einem automatischen Betrieb zumindest nahezu ausschließlich mit von einer regenerativen Energieerzeugungsanlage (20) des Wohngebäudes (4), insbesondere einer Photovoltaik-Anlage (20), produziertem Strom aufgeladen wird, wobei hierzu in das Elektro-Speicherheizgerät (10) ein Kommunikationsmodul (30) integriert ist, über das der Laderegler (32) mit einer Steuereinheit (14) kommuniziert und wobei im Betrieb die Steuereinheit (14) an den Laderegler (32) eine Information übermittelt, die mit der aktuell zur Aufladung des Elektro-Speicherheizgeräts (10) zur Verfügung stehenden elektrischen Leistung korreliert.

## Beschreibung

Die Erfindung betrifft eine Heizanlage für ein Wohngebäude umfassend ein Elektro-Speicherheizgerät mit einem integrierten Laderegler, ein Elektro-Speicherheizgerät für eine entsprechende Heizanlage sowie ein Verfahren zum Steuern einer solchen Heizanlage.

Für die Beheizung von Wohngebäuden werden zusehends auch regenerative Energiequellen wie beispielsweise Erdwärme sowie Wind- und Sonnenenergie genutzt. Die regenerativ erzeugten Energien stehen jedoch - insbesondere bei Wind- und Sonnenenergie - nicht immer dann bereit, wenn tatsächlich Energiebedarf besteht.

Die über eine Photovoltaik-Anlage erzeugte Energiemenge wird daher üblicherweise in das Stromnetz eines Energieversorgers eingespeist. Hierfür erhält der häufig private Anlagenbetreiber der Photovoltaik-Anlage eine Vergütung. Daneben bestehen Anreizsysteme für einen möglichst hohen sogenannten Eigenverbrauch, also einen möglichst hohen Energieverbrauch des regenerativ erzeugten Stroms durch den Anlagenbetreiber selbst.

Ausgehend hiervon liegt der Erfindung die Aufgabe zugrunde, einen möglichst hohen Anteil von regenerativ erzeugter Energie insbesondere bei Wohngebäuden und Privathaushalten für den Eigenverbrauch zu verwenden.

Diese Aufgabe wird erfindungsgemäß gelöst durch eine Heizanlage mit den Merkmalen des Anspruchs 1, durch ein Elektro-Speicherheizgerät mit den Merkmalen des Anspruchs 14 sowie durch ein Verfahren mit den Merkmalen des Anspruchs 15. Bevorzugte Weiterbildungen sind in den rückbezogenen Ansprüchen enthalten.

Eine entsprechende Heizanlage ist dabei für ein Wohngebäude ausgelegt und umfasst zumindest ein Elektro-Speicherheizgerät mit einem integrierten Laderegler und mit einem integrierten Kommunikationsmodul. Der Laderegler ist hierbei derart ausgebildet, dass das Elektro-Speicherheizgerät, nachfolgend auch kurz Heizgerät genannt, in einem automatischen Betrieb zumindest nahezu ausschließlich mit von einer regenerativen Energieerzeugungsanlage des Wohngebäudes, insbesondere eine Photovoltaik-Anlage, generierten elektrischen Leistung aufgeladen wird. Hierzu regelt der Laderegler die Leistungsaufnahme des Elektro-Speicherheizgeräts basierend auf einer Information, die mit der aktuell zur Aufladung des Heizgerätes zur Verfügung stehenden elektrischen Leistung korreliert und von einer Steuereinheit an das Kommunikationsmodul übermittelt wird. Je nach Ausführungsvariante erfolgt die Datenübertragung dabei entweder lediglich in eine Richtung oder aber die Informationsübermittelung erfolgt bidirektional.

Durch diese Maßnahmen wird das erfindungsgemäße Elektro-Speicherheizgerät in einer erfindungsgemäßen Heizanlage als lokaler Energiespeicher genutzt, mit dem die selbst, also lokal vor Ort, erzeugte elektrische Energie für einen Eigenverbrauch zwischengespeichert werden kann.

Unter Wohngebäude wird insbesondere ein Ein- oder Mehrfamilienhaus verstanden, das eine regenerative Energieerzeugungsanlage aufweist.

Von besonderer Bedeutung ist dabei, dass das Heizgerät - zumindest in einem automatisch gesteuerten Betrieb - zumindest nahezu ausschließlich über die regenerativ erzeugte elektrische Leistung, oder kurz Leistung, aufgeladen wird. Genau hierzu ist es erforderlich, dass der Laderegler Informationen über die aktuell zur Aufladung des Heizgerätes zur Verfügung stehende Leistung, also zum Beispiel über die aktuell regenerativ erzeugte elektrische Leistung, erhält, weswegen das Kommunikationsmodul ausgebildet ist, eine einfache Datenübertragung an den Laderegler oder auch eine bidirektionale Kommunikation zwischen dem Laderegler und der Steuereinheit zu ermöglichen. Bevorzugt ist dabei die Datenübertragung bzw. die Kommunikation auf das Nötigste begrenzt und dementsprechend werden an das Kommunikationsmodul bevorzugt lediglich Informationen übermittelt, die für die vorgesehene Aufladung des Heizgerätes benötigt werden. Gemäß einer Ausführungsvariante übermittelt die Steuereinheit zum Beispiel lediglich ein Schaltsignal oder ein Freigabesignal, woraufhin der Laderegler eine Leistungsaufnahme startet, sofern hierfür Bedarf besteht und das Heizgerät den vorgesehenen Ladezustand noch nicht erreicht hat. Alternativ hierzu werden weitere Informationen übermittelt, wie zum Beispiel die Außentemperatur in der Umgebung des Wohngebäudes, beispielsweise wenn der zu erreichende Ladezustand in Abhängigkeit der Außentemperatur vorgegeben wird.

Als aktuell zur Aufladung des Heizgerätes zur Verfügung stehende elektrische Leistung wird dabei im Sinne dieser Anmeldung typischerweise die Differenz zwischen der aktuell regenerativ erzeugten elektrischen Leistung und der aktuell durch die elektrischen Verbraucher im Wohngebäude (ausschließlich des Heizgerätes) aufgenommenen elektrischen Leistung bezeichnet. Diese wird quasi als Überschuss oder Überschussleistung angesehen und soll in das Heizgerät fließen. Jene Überschussleistung wird beispielsweise von der Steuereinheit erfasst und an das Kommunikationsmodul übermittelt. Gemäß einer alternativen einfachen Variante entspricht die aktuell zur Aufladung des Heizgerätes zur Verfügung stehende elektrische Leistung schlicht der aktuell regenerativ erzeugten elektrischen Leistung und eine Information hierüber wird an das Kommunikationsmodul gesendet.

Unter "zumindest nahezu ausschließlich" wird vorliegend verstanden, dass durch die Steuerung gewährleistet ist, dass das Heizgerät zumindest zu einem Großteil, insbesondere >80%, vorzugsweise >90% mit vor Ort regenerativ erzeugter elektrischer Leistung gespeist wird, und zwar aktuell bei einem jeweiligen Speise- oder Ladevorgang. Bevorzugt ist sichergestellt, dass das Heizgerät zu 100% mit aktuell zur Verfügung stehender regenerativ erzeugter Leistung geladen wird.

Heutige Photovoltaik-Anlagen sind üblicherweise bereits mit für die Heizanlage geeigneten Anlagen-Steuereinheiten, Stromzählern oder Umrichter-Baugruppen ausgerüstet, die Informationen über die aktuell erzeugte Leistung erfassen, mitunter aufbereiten und typischerweise als entsprechende Informationssignale zur Weiterverarbeitung zur Verfügung stellen. Bevorzugt sind daher der Laderegler und das Kommunikationsmodul zum Empfang und/ oder zur Verarbeitung derartiger Informationssignale ausgebildet, da hierdurch bereits zur Verfügung stehende Informationssignale ausgenutzt werden können. Für die Übermittelung der entsprechenden Informationen wird dann lediglich noch eine ergänzende Sendeeinheit benötigt, die beispielsweise an die ohnehin vorhandene Anlagen-Steuereinheit der Photovoltaik-Anlage, den Stromzähler oder die Umrichter-Baugruppe angeschlossen oder mit dieser verbunden wird. Mit Hilfe der übermittelten Informationssignale wird dann letztendlich das Heizgerät im Hinblick auf dessen Leistungsaufnahme gesteuert. Alternativ ist das Wohngebäude als sogenanntes intelligentes Haus ausgestaltet und weist eine Zentrale Steuereinheit auf, mit der das Kommunikationsmodul für einen Datentransfer verbunden ist.

Wie bei Wärmespeicher-Heizgeräten üblich, weist das Heizgerät einen Speicherkern sowie Heizelemente, beispielsweise aus Heizstäben, auf, über die der Speicherkern elektrisch mit Wärme beladen werden kann. Die im Speicherkern gespeicherte Wärme wird dann zeitversetzt wieder bei Bedarf abgegeben. Hierzu ist üblicherweise ein Gebläse integriert, über das Luft durch den Speicherkern geführt und dann als erwärmte Luft an den Raum abgegeben wird.

Herkömmliche Elektro-Speicherheizgeräte sind dabei typischerweise direkt über spezielle Starkstromanschlüsse zum Beispiel mittels Klemmen an das Hausnetz angeschlossen und auch somit fest installiert. Die Versorgung erfolgt zudem in der Regel über einen mehrphasigen Stromanschluss, der für sehr hohe Leistungsabgaben auch über einen längeren Zeitraum ausgelegt ist und dementsprechend eine hohe Leistungsaufnahme des klassischen Wärmespeicher-Heizgeräts ermöglicht. Jene Heizgeräte werden dann typischerweise in Phasen mit sogenannten Niedrigstrom-Tarifen, beispielsweise während der Nacht, aufgeladen. Zur Initiierung des Aufladevorgangs wird dabei üblicherweise von dem jeweiligen Energieversorger ein Rundsteuersignal über das Leitungsnetz oder über Funk an die einzelnen Haushalte übermittelt, das vom Heizgerät erkannt wird und einen Ladevorgang startet.

Im Unterschied hierzu ist bei dem vorliegenden Konzept das erfindungsgemäße Heizgerät gerade nicht mit dem Energieversorger über ein derartiges Rundsteuersignal verbunden. Es wird stattdessen vorzugsweise über einen Standard-Stecker an eine Standard-Steckdose, also insbesondere an eine gewöhnliche Haushaltssteckdose gemäß der jeweils geltenden Ländernorm, in Deutschland eine SCHUKO-Steckdose, angeschlossen. Die Installation oder vielmehr die Aufstellung eines derartigen Heizgeräts und Integration in das Heizungssystem des Wohngebäudes ist daher relativ einfach.

Da in bevorzugter Ausgestaltung an den Laderegler lediglich die Information übermittelt wird, ob und in welchem Umfang aktuell regenerativ erzeugte Leistung zur Verfügung steht, wird zudem eine konzeptionell einfache Ausgestaltung ohne hohen Steuerungsaufwand erzielt. Bei dem Heizgerät handelt es sich daher um ein einfaches, kostengünstiges dezentrales Gerät, welches sich in einfacher Weise an eine Haushaltssteckdose anschließen lässt. Es lassen sich hierdurch zudem zum Beispiel auch mehrere Heizgeräte in einem Wohnraum platzieren, also zum Beispiel zwei kleinere anstelle eines Größeren, und die Positionierung kann im Wesentlichen frei erfolgen, was zum Beispiel einer günstigen Raumausnutzung zu Gute kommt.

Auch zu diesem Zweck ist in bevorzugter Weiterbildung das Kommunikationsmodul für eine drahtlose Datenübermittlung oder für eine Datenübermittlung mittels eines Trägerfrequenzverfahrens über das Haushaltsstromnetz ausgebildet. Hierdurch sind auch in signaltechnischer Hinsicht keine zusätzlichen Installationen erforderlich. Bei der drahtlosen Datenübermittlung über ein Funksignal werden vorzugsweise derartige Standards und Protokolle verwendet, die eine möglichst einfache und vorzugsweise automatische Integration des Heizgeräts in ein bereits im Wohngebäude vorhandenes Kommunikationsnetz erlaubt. Gleiches gilt auch für die Variante über das Trägerfrequenzverfahren. Hierbei wird das System der sogenannten "Power Line Communication" (PLC) ausgenutzt, bei dem Datensignale auf das normale Stromnetz des Wohngebäudes aufmoduliert werden. Über den Anschluss an das Haushalts-Stromnetz über die Haushaltssteckdose wird daher zugleich auch ein Kommunikationskanal vorzugsweise automatisch aufgebaut. Über eine zentrale Steuereinheit, beispielsweise ein sogenanntes "Home Energy Management System" lassen sich dann beispielsweise die einzelnen Elektro-Speicherheizgeräte in ein intelligentes Haushaltsenergie-Management-System oder kurz in ein intelligentes Haus integrieren. Im Falle von Funksystemen wird beispielsweise auf die bekannten Protokolle zigBee, z-wave, enocean oder andere zurückgegriffen.

Das Kommunikationsmodul ist weiterhin zweckdienlicherweise als ein steckbares Modul und vorzugsweise als austauschbares Modul ausgebildet. Über die steckbare Ausgestaltung des Moduls ist eine einfache Anpassung an die jeweiligen Gegebenheiten ermöglicht, insbesondere kann durch die Auswahl der Art des Kommunikationsmoduls entschieden werden, ob die Kommunikation über Funk oder über PLC erfolgt.

Vor dem Hintergrund, dass das Heizgerät lediglich zur Ausnutzung der aktuell für die Aufladung bereitstehenden Leistung ausgebildet ist, ist in zweckdienlicher Weiterbildung die Leistungsaufnahme des Heizgeräts regulierbar. Dabei ist der Laderegler günstigerweise zur Regulierung der Leistungsaufnahme in Abhängigkeit der aktuell zur Verfügung stehenden regenerativ erzeugen Leistung ausgebildet und zwar insbesondere derart, dass maximal diejenige Leistungsaufnahme eingestellt oder vorgegeben wird, die der zur Aufladung zur Verfügung stehenden Leistung entspricht. Im Unterschied zu herkömmlichen Heizgeräten erfolgt daher die Beladung des Energiespeichers nicht mit einer maximalen Strommenge, sondern immer in Abhängigkeit der aktuell zur Verfügung stehenden Strommenge und ist auf diese begrenzt. Dadurch wird gewährleistet, dass für die Beladung vorzugsweise ausschließlich oder zumindest weitgehend (>80%, insbesondere 90% der Leistungsaufnahme) regenerativ erzeugte Leistung herangezogen wird.

Zweckdienlicherweise weist das Heizgerät hierzu unterschiedliche Heizstufen oder Leistungsaufnahmestufen zum Beladen seines integrierten Speicherkerns auf, die jeweils separat zuschaltbar sind. Die Heizstufen werden dabei durch einzeln zuschaltbare Heizelemente realisiert, die bevorzugt gleichartig aufgebaut sind, so dass die Leistungsaufnahme der einzelnen Heizelemente gleich ist. Ein Heizelement umfasst hierbei bevorzugt mehrere Heizstäbe.

Die einzelnen Stufen für die Leistungsaufnahme werden jeweils in Abhängigkeit der aktuell zur Verfügung stehenden regenerativ erzeugten Strommenge eingestellt und zwar derart, dass diejenige Leistungsstufe gewählt wird, die der aktuell zur Verfügung stehenden regenerativ erzeugten Strommenge am nächsten kommt und insbesondere die aktuell zur Verfügung stehende Strommenge nicht übersteigt. Dabei ist es zum Beispiel zweckmäßig, wenn die Steuereinheit für jede Leistungsaufnahmestufe oder Leistungsstufe ein eigenes leistungsstufenabhängiges Freigabesignal generiert, sobald ausreichend Leistung für die jeweilige Leistungsaufnahmestufe regenerativ erzeugt wird. Der Laderegler verwendet dann je nach Bedarf, also insbesondere je nach aktuellem Ladezustand und vorgesehenem Ladezustand, die geeignete Leistungsstufe.

Weiter ist die maximale Leistungsaufnahme, also insbesondere die höchste Leistungsaufnahmestufe, bevorzugt auf die maximale Leistungsabgabe einer gewöhnlichen, typischerweise einphasigen Haushaltssteckdose gemäß der jeweiligen Ländernorm abgestimmt, an die das Heizgerät anschließbar ist. Bei jener Haushaltssteckdose handelt es sich in der Regel um eine Standard-Steckdose, die meist mit einem genormten und somit vorgegebenen Sicherungswert abgesichert ist, in Deutschland zum Beispiel um eine SCHUKO-Steckdose mit einem vorgegebenen Sicherungswert von 16 A. Bei einer in Deutschland üblichen Netzspannung von etwa 230 V ergibt sich daher eine maximale Leistungsaufnahme von etwa 3,5 kW. Auf diese maximale Leistungsaufnahme ist daher das Heizgerät, sofern für den deutschen Markt ausgelegt, bevorzugt beschränkt. Hierzu weist das Heizgerät zum Beispiel drei einzeln zuschaltbare Heizelemente mit einer Leistungsaufnahme von je 1166 W auf, so dass die Leistungsaufnahme im Falle eines gleichzeitigen Betriebes aller drei Heizelemente etwa 3,5 kW entspricht. Alternativ sind zum Beispiel auch drei Heizelemente mit einer Leistungsaufnahme von je 500 W, 666 W, 833 W oder 1000 W vorgesehen und/ oder es kommt eine abweichende Anzahl von Heizelementen zum Einsatz.

Um eine vorgegebene oder gewünschte Raumtemperierung zu erzielen wird das Heizgerät gemäß einer Ausführungsvariante als Basisheizgerät für einen zu beheizenden Raum genutzt und durch eine weitere Heizeinrichtung, die ebenfalls zur Raumbeheizung dient, also zum Beispiel durch einen fest installierten Heizkörper einer Zentralheizung, unterstützt. Hierunter wird verstanden, dass über die zentrale Steuereinheit die Zuschaltung der weiteren Heizeinrichtung so lange unterdrückt wird, solange ausreichend Wärme über das Heizgerät zur Verfügung steht.

Die Steuerung der Raumbeheizung erfolgt dabei vorzugsweise mit Hilfe eines separaten, im Wohnraum positionierten Raumthermostats, das die aktuelle Raumtemperatur und/oder eine vorgegebene Solltemperatur an die zentrale Steuereinheit beispielsweise per Funk übermittelt. Die zentrale Steuereinheit schaltet dann bei Bedarf die weitere Heizeinrichtung zu, also dann, wenn die Solltemperatur durch eine Beheizung allein mit dem Elekto-Speicherheizgerät nicht erreicht wird.

In einer vereinfachten Ausführungsvariante erfolgt hierbei keine aktive Ansteuerung des Heizgerätes durch die zentrale Steuereinheit. Dieses gibt stattdessen Wärme quasi automatisch, beispielsweise in Abhängigkeit eines integrierten eigenen Thermostats, an den Raum ab, bis die am Thermostat des Heizgeräts eingestellte Temperatur erreicht oder die Wärme verbraucht ist. Die zentrale Steuereinheit erkennt über den zentralen Raumthermostat ein eventuelles Abfallen der Temperatur und wird dann automatisch die weitere Heizeinrichtung zuschalten bis die am zentralen Raumthermostat vorgegebene Solltemperatur erreicht ist.

Insgesamt ist daher das Heizgerät ausschließlich als eine Ergänzungsheizung zu der weiteren Heizeinrichtung ausgebildet. Die weitere Heizeinrichtung wird jedoch bevorzugt nur dann zugeschaltet, wenn über das Heizgerät keine Wärme mehr oder nicht mehr ausreichend bereitgestellt werden kann.

Um die Steuerung der Raumtemperatur über die zentrale Steuereinheit zu vereinfachen, ist in zweckdienlicher Ausgestaltung der Laderegler desweiteren derart ausgebildet, dass dieser seinen aktuellen Ladezustand an die zentrale Steuereinheit übermittelt. Unter Ladezustand wird hierbei der im Speicherkern verfügbare Wärmeinhalt verstanden. Hierzu wird üblicherweise die Temperatur des Speicherkerns als Maß für den Wärmeinhalt erfasst und an die zentrale Steuereinheit übermittelt. Die Steuereinheit erkennt daher frühzeitig, wie viel Wärmeinhalt noch verfügbar ist, um so rechtzeitig die weitere Heizeinrichtung unterstützend zuschalten zu können.

Um eine Anpassung an den zu erwartenden Wärmebedarf zu ermöglichen, weist das Heizgerät vorzugsweise weiterhin ein Einstellelement auf, über das ein gewünschter maximaler Ladezustand oder Ladegrad des Speicherkerns einstellbar ist. Dadurch wird also beispielsweise in der Übergangszeit oder auch in den Sommermonaten die tatsächliche Energieaufnahme unterhalb einer vollständigen Beladung des Speicherkerns begrenzt. Hierbei ist ein Ladezustand zwischen 0 und 100 % einstellbar. D.h. bei Bedarf kann das Beladen auch mit Hilfe des Einstellelements unterdrückt werden.

Im Hinblick auf eine möglichst einfache Ausbildung ist das Einstellelement dabei bevorzugt ausschließlich manuell betätigbar. Grundsätzlich kann dieses Einstellelement natürlich auch automatisch von der zentralen Steuereinheit angesteuert werden.

Die Kommunikation des Ladereglers mit der zentralen Steuereinheit und/oder der Steuereinheit der Photovoltaik-Anlage ist dabei vorzugsweise auf die Informationen über die aktuelle Leistung der Photovoltaik-Anlage, die von dem Laderegler empfangen wird, und andererseits die Abgabe des Ladezustands des Speicherkerns an die zentrale Steuereinheit begrenzt. Die Übermittlung der Informationen über die aktuelle Leistung der Photovoltaik-Anlage kann dabei auch über die zentrale Steuereinheit erfolgen. Hierzu übermittelt die Steuereinheit der Photovoltaik-Anlage die Information zunächst an die zentrale Steuereinheit und über diese dann an den Laderegler. Alternativ ist jene Steuereinheit auch in die zentrale Steuereinheit integriert.

Gemäß einer weiteren Ausführung weist die Photovoltaik-Anlage eine Umrichter-Baugruppe auf, in der die aktuell generierte elektrische Leistung messtechnisch erfasst wird und mittels einer Logik mit einem hinterlegten Schwellwert abgeglichen wird. An einem Signalausgang der Umrichter-Baugruppe wird dann ein einfaches Signal zur Verfügung gestellt, welches angibt, ob der hinterlegte Schwellwert aktuell überschritten wird oder nicht. Die Umrichter-Baugruppe der Photovoltaik-Anlage weist somit eine Art Schwellwertschalter auf, der dafür sorgt, dass je nach Schaltzustand am Signalausgang eine Spannung anliegt oder eben nicht. Alternativ ist ein solcher Schwellwertschalter auf eine andere Weise umgesetzt, wobei eine einfache Umsetzung bevorzugt wird. Steht nun ein entsprechendes Schwellwertsignal zu Verfügung, so wird zur Ausbildung der Steuereinheit lediglich noch eine Sendeeinheit benötigt, die initiiert durch das Schwellwertsignal ein Freigabesignal an das Kommunikationsmodul übermittelt, welches die Nutzung einer vorgegebenen elektrischen Leistung, insbesondere einer Leistungsaufnahmestufe, für den Laderegler freigibt. Jenes Freigabesignal ist dann entweder für ein vorgegebenes Zeitintervall gültig oder aber die Freigabe wird beispielsweise durch ein entsprechendes Sperrsignal von der Sendeeinheit wieder aufgehoben. Die Sperrsignale werden dabei bevorzugt ebenfalls ausgelöst durch den Schwellwertschalter in der Umrichter-Baueinheit von der Sendeeinheit übermittelt.

Weist die Photovoltaik-Anlage selbst keinerlei Leistungserfassungsvorrichtung auf, so wird die Leistungserfassung durch die Steuereinheit ermöglicht, welche hierfür beispielsweise einem typischerweise vorhandenen Umrichter nachgeschaltet wird. In diese Steuereinheit ist dann vorteilhafterweise bereits eine Sendeeinheit integriert.

Ein Ausführungsbeispiel der Erfindung wird nachfolgend anhand einer schematischen Zeichnung näher erläutert. Darin zeigt:
- Figur 1: in einem Blockschaltbild eine Heizanlage mit einem Elektro-Speicherheizgerät sowie
- Figur 2: in einem Blockschaltbild eine alternative, einfachere Ausführung der Heizanlage mit einem Elektro-Speicherheizgerät.

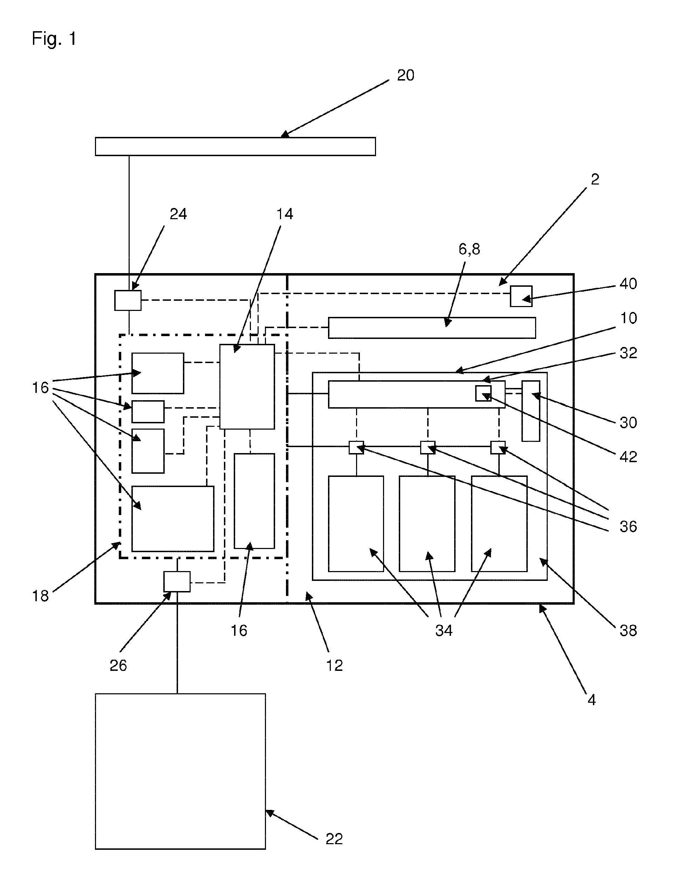

Eine nachfolgend exemplarisch beschriebene und in Fig. 1 skizzierte Heizanlage 2 dient zur Beheizung eines in Deutschland stehenden Einfamilienhauses 4 und umfasst eine Zentralheizung 6 mit mehreren Heizkörpern 8 sowie ein Elektro-Speicherheizgerät 10, nachfolgend auch kurz Heizgerät 10 genannt. Bei den Heizkörpern 8 kann es sich um Radiatoren, eine Fußbodenheizung, eine Wandheizung oder auch um Lüftungsschächte handeln. Dabei ist in jedem Wohnraum ein Heizkörper 8 der Zentralheizung 6 positioniert und fest installiert und in zumindest einem Raum 12, beispielsweise einem Wohnzimmer, ist das Elektro-Speicherheizgerät 10 angeordnet, welches beispielsweise nachträglich in die Heizanlage 2 des Einfamilienhauses 4 integriert wurde und dabei lediglich gegen ein Umkippen gesichert ist, ansonsten jedoch nicht fest installiert ist, also insbesondere nicht mit der Bausubstanz des Einfamilienhauses 4 fest verbunden oder in dieser verankert ist.

Das Einfamilienhaus 4 ist als sogenanntes intelligentes Haus ausgestaltet und mit einer zentralen Steuereinheit 14 oder kurz einer Steuereinheit 14 ausgestattet, auf die zum Beispiel auch über eine Internetverbindung zugegriffen werden kann. Über diese wird zumindest mittelbar ein Aufladen des Heizgeräts 10 in Abhängigkeit der zur Verfügung stehenden regenerativ erzeugten elektrischen Leistung gesteuert. Ergänzend können über die Steuereinheit 14 auch weitere elektrische Verbraucher 16, die an ein hausinternes elektrisches Versorgungsnetz 18 angeschlossen sind, gesteuert werden, also insbesondere an- und abgeschaltet.

Die Steuerung oder Ansteuerung des Heizgeräts 10 und ggf. auch der elektrischen Verbraucher 16 erfolgt dabei vorzugsweise derart, dass die mittels einer auf dem Dach des Einfamilienhauses 4 installierten Photovoltaik-Anlage 20 generierte elektrische Leistung soweit möglich hausintern und somit vor Ort genutzt wird, also eingesetzt wird, um den Bedarf an elektrischer Leistung im Einfamilienhaus 4 zu decken. Auf diese Weise soll ein möglichst geringer Anteil der mittels der Photovoltaik-Anlage 20 generierten elektrischen Leistung in ein externes elektrisches Versorgungsnetz 22, an welches das Einfamilienhaus 4 angeschlossen ist, eingespeist werden.

Hierzu wird vorzugsweise die von der Photovoltaik-Anlage 20 generierte elektrische Leistung mittels eines Stromzählers 24 der Photovoltaik-Anlage 20 erfasst und an die zentrale Steuereinheit 14 übermittelt. Ergänzend oder alternativ werden Informationen aus einem bidirektionalen Stromzähler 26, auch Zweirichtungszähler genannt, an die Steuereinheit 14 übermittelt, aus denen hervorgeht, in welchem Umfang aktuell elektrische Leistung aus dem externen elektrischen Versorgungsnetz 22 in das hausinterne elektrische Versorgungsnetz 18 eingespeist wird oder in welchem Umfang elektrische Leistung aus dem hausinternen elektrischen Versorgungsnetz 18 in das externe elektrische Versorgungsnetz 22 eingespeist wird. Im letzteren Fall erhält die Steuereinheit 14 daher direkt eine Information über die aktuell für weitere Verbraucher zur Verfügung stehende regenerativ erzeugte elektrische Leistung. Die Informationen beider Stromzähler 24, 26 werden vorzugsweise protokolliert und in einem Speicher der zentralen Steuereinheit 14 hinterlegt, sodass die Informationen jederzeit bei Bedarf abgerufen werden können und bspw. als Verlaufsprotokoll zur Verfügung stehen.

Für die Ansteuerung des Heizgeräts 10 oder der elektrischen Verbraucher 16 genügt die Information, wann und in welchem Umfang ein Überschuss an elektrischer Leistung hausintern vorliegt, also wann und in welchem Umfang die Photovoltaik-Anlage 20 mehr elektrische Leistung generiert, als die aktiven elektrischen Verbraucher 16 benötigen oder verbrauchen. Ist nun ein entsprechender Überschuss gegeben und besteht ein Bedarf, so können das Heizgerät 10 und / oder die elektrischen Verbraucher 16 zugeschaltet werden, d.h. das Heizgerät 10 wird aufgeladen.

Das Elektro-Speicherheizgerät 10 ist hierzu insbesondere über einen einfachen SCHUKO-Stecker 44 an das hausinterne elektrische Versorgungsnetz 18 angebunden und über ein in das Heizgerät 10 integriertes Kommunikationsmodul 30 kommunikativ mit der zentralen Steuereinheit 14 des Einfamilienhauses 4 verbunden. Das Elektro-Speicherheizgerät 10 dient hierbei ausschließlich als Energiezwischenspeicher für mittels der Photovoltaik-Anlage 20 generierte elektrische Leistung und dementsprechend werden lediglich Leistungsüberschüsse in das Heizgerät 10 eingespeist. Das Elektro-Speicherheizgerät 10 wird somit quasi ausschließlich mit elektrischer Energie aus einer regenerativen Energiequelle versorgt und gespeist.

Hierzu übermittelt die zentrale Steuereinheit 14 an das bevorzugt als steckbares und austauschbar ausgebildetes Kommunikationsmodul 30 im Heizgerät 10 die Information, zu welchem Zeitpunkt in welchem Umfang überschüssige Leistung zur Verfügung steht und somit, welche elektrische Leistung zur Aufladung des Heizgerätes 10 zur Verfügung steht und genutzt werden darf. Diese Information steht dann einem Laderegler 32 des Heizgerätes 10 zur Verfügung, der die Leistungsaufnahme des Elektro-Speicherheizgerätes 10 steuert und reguliert, wobei der Laderegler 32 eine Leistungsaufnahme für das Heizgerät 10 derart vorgibt, dass die Leistungsaufnahme der überschüssigen elektrischen Leistung möglichst nahe kommt, ohne diese zu überschreiten.

Das Heizgerät 10 weist vorzugsweise mehrere, beispielsweise drei Leistungsaufnahmestufen auf, die durch Heizelemente 34 oder Gruppen von Heizelementen 34 gebildet sind. Dementsprechend erfolgt die Regulierung der Leistungsaufnahme durch den Laderegler 32 stufenweise durch Zuschalten der Heizelemente. Eine Erhöhung oder Verringerung der Leistungsaufnahmestufe erfolgt dabei durch die Zuschaltung bzw. Abschaltung eines Heizelements 34 vorzugsweise über ein Schaltrelais 36, welches von dem Laderegler 32 angesteuert wird.

Im Ausführungsbeispiel weist das Elektro-Speicherheizgerät 10 drei Heizelemente 34 auf, die unabhängig voneinander zu- bzw. abschaltbar sind und die nach an sich bekanntem Prinzip zum Beladen eines üblicherweise massiven Speicherkerns 38, also zum Aufheizen einer wärmespeichernden Masse, ausgebildet sind. Dabei ist jedes Heizelement 34 für bevorzugt eine identische Leistungsaufnahme im Bereich von insbesondere 500 W bis 1500 W ausgelegt. Die maximale Leistungsaufnahme des Elektro-Speicherheizgerätes 10 ist dabei vorzugsweise in Abhängigkeit der landesüblichen Versorgungsspannung der Versorgungsnetze für Wohngebäude, in Deutschland etwa 230 V, auf einen Stromwert begrenzt, für den - nach den jeweils gültigen landestypischen Normen - die Standard-Steckdose ausgelegt ist, bzw. mit dem diese abgesichert ist. Die maximale Leistungsaufnahme liegt beispielsweise bei 1,5 kW, bei 2,0 kW, bei 2,5 kW, bei 3 kW oder bei 3,5 kW, Insbesondere für Deutschland liegt die maximale Leistungsaufnahme vorzugsweise bei 3,5 kW. Für die maximale Leistungsaufnahme werden insbesondere alle Heizelemente 34 zugeschalten.

Zusätzlich zur Anpassung der Leistungsaufnahme an den Leistungsüberschuss erfolgt durch den Laderegler 32 in bevorzugter Ausgestaltung eine Art Modulation der Leistungsaufnahme derart, dass Heizelemente 34 alternierend zugeschaltet und abgeschaltet werden, um auf diese Weise den Speicherkern gleichmäßig zu beladen, also über das Volumen verteilt gleichmäßig aufzuheizen. Erlaubt also der Leistungsüberschuss lediglich die gleichzeitige Aktivierung zweier Heizelemente 34, so erfolgt durch den Laderegler 32 eine Ansteuerung der Schaltrelais 36 derart, dass in regelmäßigen zeitlichen Abständen ein aktives Heizelement 34 abgeschaltet wird und dafür das bis dahin nicht genutzte Heizelement 34 angeschalten wird. Auf diese Weise ist dann bspw. bei nebeneinander angeordneten Heizelementen 34 zunächst das linke Heizelement 34 inaktiv, dann das mittlere, nachfolgend das rechte, dann wieder das linke und so weiter.

Da das Elektro-Speicherheizgerät 10 lediglich mit elektrischer Energie versorgt wird, die mittels der Photovoltaik-Anlage 20 generiert wird unterliegt die pro Tag in das Heizgerät 10 eingespeiste elektrische Energie jahreszeitbedingten und wetterbedingten Schwankungen. Aus diesem Grund ist die im Heizgerät 10 zwischengespeicherte Wärme mitunter nicht ausreichend, um den Raum 12 allein mittels des Heizgerätes 10 über den gesamten Tag hinweg auf eine vorgegebene Temperatur hochzuheizen oder auf dieser Temperatur zu halten. Ist dies der Fall, so wird das Elektro-Speicherheizgerät 10 quasi zur Basisbeheizung des Raumes 12 genutzt und mit Hilfe eines Temperatursensors 40 im Wohnzimmer 12 wird ermittelt, welche Temperatur im Wohnzimmer 12 mittels des Heizgerätes 10 bei maximaler Wärmeabgabe erreicht wird. Der entsprechende Temperaturwert wird dann in der zentralen Steuereinheit 14 herangezogen, um zu ermitteln, inwieweit eine Nachheizung im Wohnzimmer 12 mittels des dort installierten Heizkörpers 8 der Zentralheizung 6 erfolgen muss, um die durch Programmierung der Steuereinheit 14 oder mit Hilfe eines Thermostats vorgegebene Solltemperatur im Wohnzimmer 12 zu erreichen. Daraufhin wird dann der Heizkörper 8 durch die Steuereinheit 14 angesteuert, sodass durch die kombinierte Nutzung des Elektro-Speicherheizgerätes 10 und der Zentralheizung 6 die gewünschte Temperatur, also die Solltemperatur, im Raum 12 mit dem Elektro-Speicherheizgerät 10 erreicht und gehalten wird.

Für den Fall, dass die Photovoltaik-Anlage 20 mehr überschüssige elektrische Energie generiert, als im Elektro-Speicherheizgerät 10 benötigt wird, um allein mit diesem das Wohnzimmer 12 vollständig zu beheizen, besteht die Möglichkeit, die pro Tag in das Heizgerät 10 eingespeiste elektrische Energie zu begrenzen. Hierzu weist das Heizgerät 10 einen manuellen Drehregler 42 auf, über den der gewünschte maximale Beladegrad oder der maximale Ladezustand einstellbar und somit limitierbar ist.

Daneben ist grundsätzlich jedoch auch eine automatische Ermittlung eines Soll-Ladegrades des Heizgerätes 10 mit Hilfe der Steuereinheit 14 und / oder des Ladereglers 24 möglich, wobei bei Erreichen des Soll-Ladegrades automatisch die Stromzufuhr unterbunden wird. Der Soll-Ladegrad des Heizgerätes 10 wird dabei zum Beispiel durch die Steuereinheit 14 beispielsweise auf der Basis der Messwerte eines Außentemperaturfühlers vorgegeben.

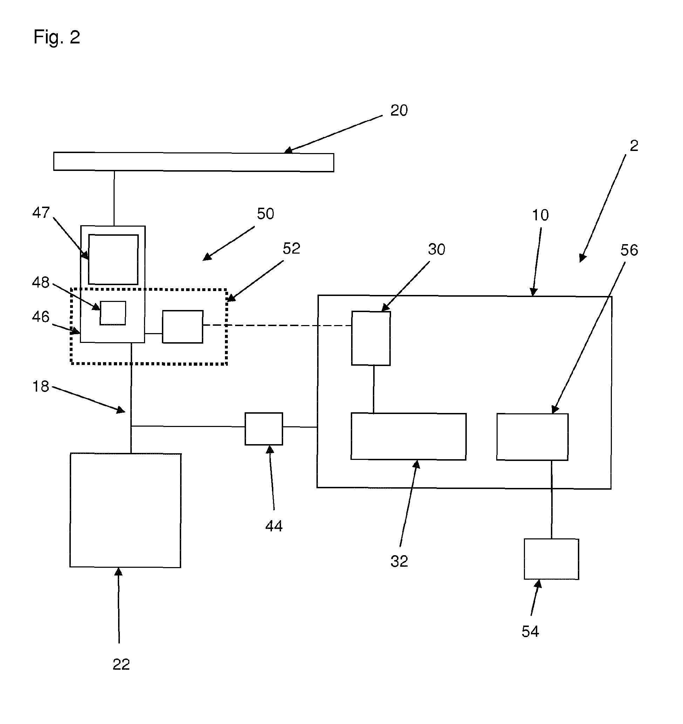

Eine alternative und sehr einfach gehaltene Ausführung der Heizanlage 2 ist in Fig. 2 schematisch wiedergegeben. Hier umfasst die Photovoltaik-Anlage 20 eine Umrichter-Baugruppe 46 mit einem Umrichter 47 sowie mit einer Leistungserfassungseinheit, die nach Art eines Schwellwertschalters 48 ausgebildet ist. Jener Schwellwertschalter 48 sorgt dafür, dass an einem Signalausgang eine Spannung anliegt, solange ein vorgegebener Leistungswert von der aktuell generierten Leistung überschritten wird. Liegt die aktuell generierte Leistung hingegen unterhalb des vorgegebenen Leistungswertes, so liegt an dem Signalausgang keine Spannung an.

An jenen Signalausgang ist eine Sendeeinheit 50 angeschlossen, die zusammen mit der Leistungserfassungseinheit, also zusammen mit dem Schwellwertschalter 48, eine dezentrale Steuereinheit 52 ausbildet, welche, ähnlich wie zuvor die zentrale Steuereinheit 14, zumindest mittelbar ein Aufladen des Elektro-Speicherheizgeräts 10 steuert. Hierzu generiert die Sendeeinheit 50 initiiert durch den Schwellwertschalter 48 ein Freigabesignal, welches an das Kommunikationsmodul 30 übermittelt wird. Der Laderegler 32 wiederum startet die durch das Freigabesignal freigegebene Leistungsaufnahme, zumindest, sofern hierfür Bedarf besteht. Gestoppt wird der so ausgelöste Ladevorgang entweder, sobald der vorgegebene Ladezustand erreicht ist, oder wenn das Kommunikationsmodul 30 von der Sendeeinheit 50 ein Sperrsignal empfangt, welches diese ebenfalls initiiert durch den Schwellwertschalter 48 generiert.

Eine weitere Ausgestaltungsvariante ist für die Fälle vorgesehen, bei denen eine bereits eingebaute Photovoltaik-Anlage 20 keine Leistungserfassungseinheit aufweist. Hier wird eine entsprechende Leistungserfassung mittels der dezentralen Steuereinheit 52 ermöglicht und vorgenommen, die hierfür dem Umrichter 47 der Photovoltaik-Anlage 20 nachgeschaltet ist. Die Leistungserfassungseinheit ist dabei bevorzugt derart ausgestaltet, dass für jede Leistungsaufnahmestufe des Heizgerätes 10 ein eigener Schwellwertschalter 48 realisiert ist. Dementsprechend generiert dann die Sendeeinheit 50 initiiert durch den jeweiligen Schwellwertschalter 48 ein eigenes Freigabesignal für die zum entsprechenden Schwellwert gehörende Leistungsaufnahmestufe und sendet diese an das Kommunikationsmodul 30. Dabei wird wiederum ein entsprechendes Freigabesignal für eine Leistungsaufnahmestufe generiert und gesendet, sobald die Photovoltaik-Anlage 20 mindestens so viel elektrische Leistung generiert, wie das Heizgerät 10 beim Betrieb mit der entsprechenden Leistungsaufnahmestufe aufnimmt.

Der Laderegler 32 wählt bei dieser Ausführung nach Bedarf eine aus den freigegebenen Leistungsaufnahmestufen aus und gibt diese für einen nachfolgenden Ladevorgang vor. Fällt die Leistung der Photovoltaik-Anlage 20 wieder ab, so werden die bis dahin freigegebenen Leistungsaufnahmestufen nach und nach wieder gesperrt und hierzu übermittelt die Sendeeinheit 50 entsprechende Sperrsignale aus, auf die der Laderegler 32 wiederum reagiert. Alternativ hierzu dienen die von der Sendeeinheit 50 gesendeten Signale direkt als Schaltsignale, die den Laderegler 32 veranlassen, eine bestimmte Leistungsaufnahmestufe für einen nachfolgenden Ladevorgang vorzugeben. Eine Auswahl durch den Laderegler 32 erfolgt somit in diesem Fall nicht.

Die Datenübertragung von der Sendeeinheit 50 zum Kommunikationsmodul 30 erfolgt bei den zuvor beschriebenen Ausführungsvarianten per Funk und/oder leitungsgebunden über das hausinterne elektrische Versorgungsnetz 22 mittels einer sogenannten "Power Line Communication" (PLC).

Die Entladung des Heizgerätes 10 und somit die Beheizung des Raumes 12 erfolgt im Ausführungsbeispiel gemäß Fig. 2 mittels eines externen im Raum 12 positionierten Raumtemperaturreglers 54, an dem sich eine gewünschte Temperatur manuell einstellen lässt, und der in Abhängigkeit der ermittelten Raumtemperatur eine Lüfterstufe für einen Lüfter 56 im Heizgerätes 10 durch Übermittelung eines Steuersignals vorgibt. Auch dieses Signal wird entweder per Funk oder über das hausinterne elektrische Versorgungsnetz 22 mittels einer sogenannten "Power Line Communication" (PLC) übertragen.

Alternativ hierzu ist ein vergleichbarer manuell bedienbarer Raumtemperaturregler als interner Raumtemperaturregler in das Heizgerät 10 integriert.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Heizanlage
- 4: Einfamilienhaus
- 6: Zentralheizung
- 8: Heizkörper
- 10: Elektro-Speicherheizgerät / Heizgerät
- 12: Raum
- 14: zentrale Steuereinheit / Steuereinheit
- 16: elektrischer Verbraucher
- 18: hausinternes elektrisches Versorgungsnetz
- 20: Photovoltaik-Anlage
- 22: externes elektrisches Versorgungsnetz
- 24: Stromzähler der Photovoltaik-Anlage
- 26: bidirektionaler Stromzähler
- 30: Kommunikationsmodul
- 32: Laderegler
- 34: Heizelement
- 36: Schaltrelais
- 38: Speicherkern
- 40: Temperatursensor
- 42: manueller Drehregler
- 44: Schuko-Stecker
- 46: Umrichter-Baugruppe
- 47: Umrichter
- 48: Schwellwertschalter
- 50: Sendeeinheit
- 52: dezentrale Steuereinheit
- 54: externer Temperaturregler
- 56: Lüfter

## Patentansprüche

1. Heizanlage (2) für ein Wohngebäude (4) umfassend ein Elektro-Speicherheizgerät (10) mit einem integrierten Laderegler (32),
**dadurch gekennzeichnet,**
**dass** der Laderegler (32) derart ausgebildet ist, dass das Elektro-Speicherheizgerät (10) in einem automatischen Betrieb zumindest nahezu ausschließlich mit von einer regenerativen Energieerzeugungsanlage (20) des Wohngebäudes (4), insbesondere einer Photovoltaik-Anlage (20), produziertem Strom aufgeladen wird, wobei hierzu in das Elektro-Speicherheizgerät (10) ein Kommunikationsmodul (30) integriert ist, über das der Laderegler (32) mit einer Steuereinheit (14) kommuniziert und wobei im Betrieb die Steuereinheit (14) an den Laderegler (32) eine Information übermittelt, die mit der aktuell zur Aufladung des Elektro-Speicherheizgeräts (10) zur Verfügung stehenden elektrischen Leistung korreliert.

2. Heizanlage (2) nach Anspruch 1,
**dadurch gekennzeichnet,**
**dass** an den Laderegler (32) ausschließlich die Information übermittelt wird, ob und in welchem Umfang aktuell elektrische Leistung zur Aufladung des Elektro-Speicherheizgeräts (10) zur Verfügung steht.

3. Heizanlage (2) nach vorhergehenden Ansprüche,
**dadurch gekennzeichnet,**
**dass** das Elektro-Speicherheizgerät (10) über einen Standard-Stecker (44), insbesondere einen Schuko-Stecker (44), an eine Standard-Steckdose anschließbar ist.

4. Heizanlage (2) nach einem der vorhergehenden Ansprüche,
**dadurch gekennzeichnet,**
**dass** das Kommunikationsmodul (30) für eine drahtlose Informationsübermittlung oder für eine Informationsübermittlung mittels eines Trägerfrequenzverfahrens über das Haushaltsstromnetz (18) ausgebildet ist.

5. Heizanlage (2) nach einem der vorhergehenden Ansprüche,
**dadurch gekennzeichnet,**
**dass** das Kommunikationsmodul (30) als ein austauschbares und insbesondere steckbares Modul (30) ausgebildet ist.

6. Heizanlage (2) nach einem der vorhergehenden Ansprüche,
**dadurch gekennzeichnet,**
**dass** die Leistungsaufnahme des Elektro-Speicherheizgeräts (10) regulierbar ist und hierzu der Laderegler (32) insbesondere zur Regulierung der Leistungsaufnahme in Abhängigkeit der aktuell zur Verfügung stehenden regenerativ erzeugten elektrischen Leistung ausgebildet ist.

7. Heizanlage (2) nach einem der vorhergehenden Ansprüche,
**dadurch gekennzeichnet,**
**dass** die Leistungsaufnahme des Elektro-Speicherheizgeräts (10) in Stufen regulierbar ist und dass der Laderegler (32) derart eingerichtet ist, dass dieser die Leistungsaufnahme des Elektro-Speicherheizgeräts (10) derart reguliert, dass die Leistungsaufnahme der aktuellen Leistungsaufnahmestufe der aktuell zur Aufladung des Elektro-Speicherheizgeräts (10) zur Verfügung stehenden elektrischen Leistung am nächsten kommt.

8. Heizanlage (2) nach einem der vorhergehenden Ansprüche,
**dadurch gekennzeichnet**,
bei der das Elektro-Speicherheizgerät (10) eine Anzahl von Heizelementen (34) oder Gruppen von Heizelementen (34) zum Beladen eines Speicherkerns (38) aufweist, die jeweils separat zuschaltbar sind, wobei das Elektro-Speicherheizgerät (10) bevorzugt drei gleichartig ausgestaltete Heizelemente (34) insbesondere mit je zwei Heizstäben aufweist.

9. Heizanlage (2) nach Anspruch 8,
**dadurch gekennzeichnet,**
**dass** der Laderegler (32) derart eingerichtet ist, dass die Heizelemente (34) alternierend zugeschaltet und abgeschaltet werden, um den Speicherkern (38) gleichmäßig zu beladen.

10. Heizanlage (2) nach einem der vorhergehenden Ansprüche,
**dadurch gekennzeichnet,**
**dass** die Steuereinheit (14) derart eingerichtet ist, dass diese initiiert durch einen Schwellwertschalter (48) ein Freigabesignal generiert, welches die Nutzung einer vorgegebenen elektrischen Leistung, insbesondere einer Leistungsaufnahmestufe, für den Laderegler (32) freigibt.

11. Heizanlage (2) nach einem der vorhergehenden Ansprüche,
**dadurch gekennzeichnet,**
**dass** die Steuereinheit (14) zur Steuerung der Beheizung zumindest eines Raumes (12) im Wohngebäude (4) ausgebildet ist, in welchem das Elektro-Speicherheizgerät (10) positioniert ist, und dass in diesem Raum (12) eine von der Steuereinheit (14) gesteuerte Heizvorrichtung (6,8) angeordnet ist, wobei die Steuerung der Beheizung derart erfolgt, dass zur Beheizung des Raumes (12) zunächst die im Elektro-Speicherheizgerät (10) gespeicherte Wärme genutzt wird, bevor eine Beheizung mittels der Heizvorrichtung (6,8) erfolgt.

12. Heizanlage (2) nach einem der vorhergehenden Ansprüche,
**dadurch gekennzeichnet,**
**dass** der Laderegler (32) eingerichtet ist, den aktuellen Ladezustand des Elektro-Speicherheizgeräts (10) an die Steuereinheit (14) zu übermittelten.

13. Heizanlage (2) nach einem der vorhergehenden Ansprüche,
**dadurch gekennzeichnet,**
**dass** das Elektro-Speicherheizgerät (10) ein Einstellelement (42) aufweist, über das insbesondere manuell ein gewünschter maximaler Beladegrad einstellbar ist.

14. Elektro-Speicherheizgerät (10) für eine Heizanlage (2) nach einem der vorhergehenden Ansprüche, umfassend einen integrierten Laderegler (32) und ein Kommunikationsmodul (30), wobei der Laderegler (32) derart ausgebildet ist, dass dieser die Leistungsaufnahme auf der Basis einer im Betrieb über das Kommunikationsmodul (30) von einer Steuereinheit (14) empfangene Information, die mit der aktuell zur Aufladung zur Verfügung stehenden elektrischen Leistung korreliert, Regelt.

15. Verfahren zum Steuern einer Heizanlage (2) für ein Wohngebäude (4), welche ein Elektro-Speicherheizgerät (10) aufweist"
**dadurch gekennzeichnet,**
**dass** das Elektro-Speicherheizgerät (10) in einem automatischen Betrieb zumindest nahezu ausschließlich mit von einer regenerativen Energieerzeugungsanlage (20) des Wohngebäudes (4), insbesondere einer PhotovoltaikAnlage (20), generierter elektrischer Leistung aufgeladen wird, wobei hierzu in das Elektro-Speicherheizgerät (10) ein Kommunikationsmodul (30) integriert ist, über das ein Laderegler (32) des Elektro-Speicherheizgeräts (10) mit einer Steuereinheit (14) kommuniziert und wobei die Steuereinheit (14) an den Laderegler (32) eine Information übermittelt, die mit der aktuell zur Aufladung des Elektro-Speicherheizgeräts (10) zur Verfügung stehenden elektrischen Leistung korreliert.
